# FASCICULE DE BREVET EUROPEEN

(11) **EP 4 185 499 B1**
(45) Date de publication et mention de la délivrance du brevet: **14.08.2024**
(21) Numéro de dépôt: 21739383.4
(22) Date de dépôt: 06.07.2021
(51) Int. Cl.: B60S 1/56, B60S 1/54, G01S 17/00, G02B 27/00

(54) **PROCÉDÉ DE NETTOYAGE S'UN SYSTÈME DE DÉTECTION ÉQUIPANT UN VÉHICULE ET VÉHICULE AUTOMOBILE CORRESPONDANT**
VERFAHREN ZUM REINIGEN EINES ERFASSUNGSSYSTEMS EINES FAHRZEUGS UND KORRESPONDIERENDES KRAFTFAHRZEUG
METHOD OF CLEANING A DETECTION SYSTEM OF A VEHICLE AND CORRESPONDING MOTOR VEHILCE

(30) Priorité: 22.07.2020 FR 2007686
(43) Date de publication de la demande: 31.05.2023
(73) Titulaire: Valeo Systèmes d'Essuyage, 78322 le Mesnil Saint Denis (FR)
(72) Inventeur: BAUDOUIN, Maxime, 78320 LE MESNIL SAINT DENIS (FR)
(74) Mandataire: Valeo Visibility
(86) Numéro de dépôt international: PCT/EP2021/068603
(87) Numéro de publication internationale: WO 2022/017771

(56) Documents cités:
- EP-A1- 2 879 114
- WO-A1-2020/023852

## Description

La présente invention se situe dans le domaine des systèmes de nettoyage de véhicule automobile. Plus particulièrement, l'invention se rapporte à un procédé de nettoyage du système de nettoyage de système de détection installé dans les véhicules automobiles. Le document EP 2 879 114 A1 divulgue un procédé de nettoyage d'un système de détection équipant un véhicule selon l'art antérieur.

Lorsque les systèmes de détection, par exemple des capteurs optiques ou électromagnétiques, sont disposés derrière un parebrise d'un véhicule automobile, le nettoyage de ces systèmes de détection s'effectue de manière indirecte par le mouvement de balayage d'un système d'essuyage du parebrise, notamment lors de l'apparition de phénomènes météorologiques. Afin d'assurer un relevé de données fiable par le système de détection, celui-ci est alors configurée pour être synchronisé avec le mouvement du système d'essuyage lorsque celui-ci passe devant le système de détection.

Lorsque les systèmes de détection ne sont pas positionnés derrière le parebrise du véhicule automobile, ceux-ci peuvent présenter une surface vitrée, distincte dudit parebrise, pouvant être sujette aux pollutions extérieures. Ces systèmes de détection sont alors associés à un dispositif de nettoyage, indépendant et distinct du système d'essuyage du parebrise.

Un des problèmes des dispositifs de nettoyage de ces systèmes de détection réside d'une part en ce qu'ils doivent être synchronisés avec la captation des données par le système de détection, et d'autre part en ce qu'ils peuvent nécessiter la création d'une nouvelle unité de contrôle permettant cette synchronisation entre le système de détection et le dispositif de nettoyage. Dit autrement, les systèmes de détection lorsqu'ils sont configurés pour fonctionner derrière le parebrise du véhicule automobile comprenant le système d'essuyage, présentent une performance et une fiabilité dans la captation de données diminuées lorsqu'ils ne sont pas synchronisés de manière similaire avec le dispositif de nettoyage.

Un but de la présente invention est donc de remédier aux inconvénients évoqués ci-dessus en proposant un dispositif de nettoyage d'un système de détection configuré pour être synchronisé avec la captation des données par le système de détection. De manière optionnelle, ce système de détection peut également être synchronisé avec le système d'essuyage du parebrise du véhicule automobile.

L'invention porte alors sur un procédé de nettoyage d'un système de détection équipant un véhicule, le système de détection comprenant une surface vitrée, au moins un dispositif de détection et un dispositif d'acquisition d'informations en provenance du dispositif de détection, le véhicule comprenant un dispositif de nettoyage à air pulsé dirigé sur la surface vitrée, le dispositif d'acquisition captant l'information en provenance du dispositif de détection selon une première fréquence donnée et le dispositif de nettoyage projette l'air pulsé sur la surface vitrée selon une deuxième fréquence identique à la première fréquence à plus ou moins 10%.

Un tel procédé de nettoyage du système de détection permet d'utiliser des moyens de calcul préalablement développés par un constructeur automobile et évite ainsi un nouveau développement en amont. Dit autrement, les systèmes de détection qui, dans l'art antérieur, sont disposés à l'arrière d'un parebrise d'un véhicule automobile et donc configurés pour fonctionner de manière synchronisée avec un système d'essuyage dudit parebrise, sont aptes à fonctionner de manière fiable lorsqu'ils ne sont pas disposés à l'arrière du parebrise sans que cela ne nécessite un nouveau développement préalable grâce au procédé de nettoyage de l'invention.

Le véhicule est par exemple un véhicule automobile comprenant au moins le parebrise et le système d'essuyage apte à balayer la surface du parebrise. Selon un premier exemple de l'invention, la surface vitrée du système de détection peut être distincte du parebrise du véhicule automobile. Selon un deuxième exemple de l'invention, la surface vitrée peut également être une portion du parebrise du véhicule automobile dont la surface n'est pas balayée par les balais d'essuyage.

La surface vitrée est disposée en regard du dispositif de détection, afin que celui-ci puisse être protégé tout en captant les informations de l'environnement extérieur du véhicule automobile. On comprend alors que la surface vitrée est une surface transparente ou translucide de manière à laisser passer les rayons émis et/ou reçus par le dispositif de détection. La surface vitrée peut par exemple être de manière non limitative, du verre ou du plexiglas.

Le système de détection peut comporter tout type de capteurs/émetteurs, qu'ils soient optiques, électromagnétiques ou encore ultrasoniques.

Plus particulièrement, le système de détection peut prendre la forme par exemple d'un capteur optique de prise de vues tel qu'une caméra. Il peut s'agir d'un capteur CCD (acronyme anglais pour « charged coupled device » signifiant dispositif de transfert de charge) ou bien d'un capteur CMOS comportant une matrice de photodiodes miniatures. Le système de détection peut selon un autre exemple prendre la forme d'un capteur de rayonnement infrarouge tel qu'une caméra infrarouge.

Alternativement, le système de détection peut prendre la forme par exemple d'un émetteur-récepteur de rayonnement électromagnétique, comme un radar (« Radio, Détection And Ranging ») pour l'émission et la réception d'ondes radio ou comme un LIDAR, acronyme en anglais de "light détection and ranging" pour la télédétection laser, ou comme un capteur/émetteur Infrarouge pour l'émission et la réception d'ondes infrarouges.

Le système de détection peut également prendre la forme par exemple d'un émetteur-récepteur de rayonnement acoustique pour l'émission et la réception d'onde ultrasonique.

Le système de détection comprend ainsi le dispositif de détection qui transmet les informations de l'environnement extérieur au véhicule automobile au dispositif d'acquisition afin que celui-ci traite ces informations, étant entendu que le dispositif d'acquisition capte des informations selon la première fréquence, et le dispositif de nettoyage projette l'air pulsé sur la surface vitrée selon la deuxième fréquence identique à +/- 10% à la première fréquence.

On tire avantage de cette caractéristique évoquée ci-dessus en ce qu'elle permet une acquisition de données plus fiable par le dispositif d'acquisition. Dit autrement, l'information captée par le dispositif d'acquisition est plus fiable lorsque la surface vitrée présente aucune ou peu de pollution extérieure, celles-ci ayant été soufflée suivant une fréquence identique par le dispositif de nettoyage.

Selon une caractéristique de l'invention, la première fréquence et la deuxième fréquence sont identiques.

Selon une caractéristique de l'invention, l'acquisition d'informations en provenance du dispositif de détection par le dispositif d'acquisition s'effectue en même temps que la projection d'air pulsé sur la surface vitrée par le dispositif de nettoyage.

Selon une alternative de l'invention, l'acquisition d'informations en provenance du dispositif de détection par le dispositif d'acquisition s'effectue postérieurement à la projection d'air pulsé sur la surface vitrée par le dispositif de nettoyage. Dit autrement, la projection d'air pulsé, bien que synchronisée avec l'acquisition d'information, peut être décalée de sorte à intervenir chronologiquement juste avant cette étape d'acquisition.

On comprend que l'action simultanée ou décalée du nettoyage de la surface vitrée ménagée en regard du dispositif de détection et la captation de l'information par le dispositif d'acquisition permet l'obtention d'informations fiables en ce sens que la surface vitrée ne présente pas ou peu d'interférence visuelle sur sa surface au moment où l'information est relevée. On entend donc par le caractère simultané, qu'un intervalle de temps proche de 0 seconde existe entre la captation de l'information en provenance du dispositif de détection et la projection d'air pulsé par le dispositif de nettoyage. Par décalé, on entend un intervalle de temps compris entre 2% et 25% du temps qui s'écoule entre deux captations d'informations en provenance du dispositif de détection.

Selon une caractéristique de l'invention, l'acquisition d'informations en provenance du dispositif de détection et la projection d'air pulsé sur la surface vitrée sont dépendantes de la détection d'un évènement météorologique.

L'événement météorologique peut être par exemple un phénomène de pluie et le dispositif de nettoyage est alors apte à éliminer les gouttes d'eau qui se déposent sur la surface vitrée du système de détection.

Selon une caractéristique de l'invention, la détection de l'événement météorologique s'effectue par un capteur météorologique.

Le capteur météorologique peut être par exemple un capteur de pluie. Le capteur de pluie peut alors selon un premier exemple de réalisation de l'invention être indépendant du système de détection et être ménagé au niveau du parebrise du véhicule automobile. Selon un deuxième exemple de réalisation de l'invention, le capteur de pluie peut également être intégré au système de détection.

Selon une caractéristique de l'invention, préalablement à la projection de l'air pulsé sur la surface vitrée par le dispositif de nettoyage, le procédé comprend au moins une étape de détection de l'événement météorologique au moyen du capteur météorologique.

Le capteur météorologique, par exemple le capteur de pluie, transmet des données sur la situation météorologique extérieure au véhicule automobile à une unité de contrôle comprenant le dispositif d'acquisition. L'unité de contrôle traite alors l'information envoyée par le capteur de pluie est commande d'une part au dispositif d'acquisition de capter l'information en provenance du dispositif de détection selon la première fréquence et d'autre part au dispositif de nettoyage de projeter l'air pulsé sur la surface vitrée selon la deuxième fréquence, égale à la première fréquence.

Selon une caractéristique de l'invention, les données de l'événement météorologique recueillies par le capteur météorologique comprennent au moins une donnée d'intensité dudit événement météorologique qui adapte la première fréquence d'acquisition d'informations en provenance du dispositif de détection et la deuxième fréquence de projection de l'air pulsé sur la surface vitrée par le dispositif de nettoyage à cette donnée illustrant l'intensité de l'évènement météorologique.

On comprend de cette caractéristique que la première fréquence et la deuxième fréquence sont directement corrélées à l'intensité de l'événement météorologique déterminée par le capteur météorologique. Dit autrement, plus l'intensité de l'événement météorologique est élevée, et plus la première fréquence d'acquisition d'informations en provenance du dispositif de détection et la deuxième fréquence de projection de l'air pulsé sur la surface vitrée sont élevées.

L'invention couvre également un véhicule automobile équipé d'un parebrise et d'un système de détection de l'environnement extérieur au véhicule, le système de détection comprenant une surface vitrée distincte du parebrise, au moins un dispositif de détection et un dispositif d'acquisition d'informations en provenance du dispositif de détection, le véhicule automobile comprenant un dispositif de nettoyage à air pulsé dirigé sur la surface vitrée du système de détection, le véhicule automobile étant configuré pour mettre en oeuvre le procédé de nettoyage tel que défini ci-avant.

On comprend donc que les rayons émis ou reçus par le système de détection ne traversent pas le parebrise du véhicule automobile, mais la surface vitrée dudit système de détection.

On tire avantage d'un tel procédé de nettoyage du système de détection, particulièrement lors de la mise en mouvement du véhicule automobile durant des événements météorologiques, tel que par exemple de la pluie.

Selon une caractéristique du véhicule automobile, celui-ci comprend un système d'essuyage du parebrise, le système d'essuyage étant opéré suivant une troisième fréquence, la deuxième fréquence étant identique à plus ou moins 10% à la troisième fréquence.

Le système d'essuyage du parebrise comprend au moins un balai d'essuyage, un bras porteur du balai d'essuyage et un moteur de mise en mouvement dudit bras et balai d'essuyage. On comprend alors que le système d'essuyage et le nettoyage de la surface vitrée du système de détection par le dispositif de nettoyage sont synchronisés.

On comprend également que la première fréquence d'acquisition d'informations en provenance du dispositif de détection par le dispositif d'acquisition est identique à la troisième fréquence de mise en mouvement du balai d'essuyage.

Le système d'essuyage peut également être placé sous la dépendance d'une unité de contrôle, l'unité de contrôle comprenant le dispositif d'acquisition.

L'unité de contrôle est alors reliée au capteur météorologique. A la suite de la réception des données de l'événement météorologique, notamment l'intensité de ce dernier, l'unité de contrôle envoie un signal d'une part au moteur du système d'essuyage afin qu'il mette en mouvement le balai d'essuyage selon la troisième fréquence, et d'autre part au dispositif d'acquisition afin qu'il capte l'information en provenance du dispositif de détection selon la première fréquence et enfin au dispositif de nettoyage afin qu'il projette le flux d'air pulsé sur la surface vitrée du système de détection selon la deuxième fréquence identique à la première fréquence.

De manière avantageuse, la première fréquence, la deuxième fréquence et la troisième fréquence sont égales les unes des autres et l'ensemble des actions auxquelles elles sont reliées sont effectuées de manière simultanée, ou décalée mais selon la même fréquence.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig.1] est une vue générale d'un véhicule automobile comprenant un parebrise équipé d'un système d'essuyage et un système de détection ménagé dans une calandre du véhicule automobile pour lequel est mis en oeuvre un procédé de nettoyage selon l'invention ;
[Fig.2] est une représentation schématique d'un dispositif de nettoyage du système de détection, mettant en oeuvre l'invention ;
[Fig.3] est un ensemble de graphes représentant des fréquences d'utilisation du système de détection, du système de nettoyage et du système d'essuyage.

Les caractéristiques, variantes et les différentes formes de réalisation de l'invention peuvent être associées les unes avec les autres, selon diverses combinaisons, dans la mesure où elles ne sont pas incompatibles ou exclusives les unes aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique antérieur.

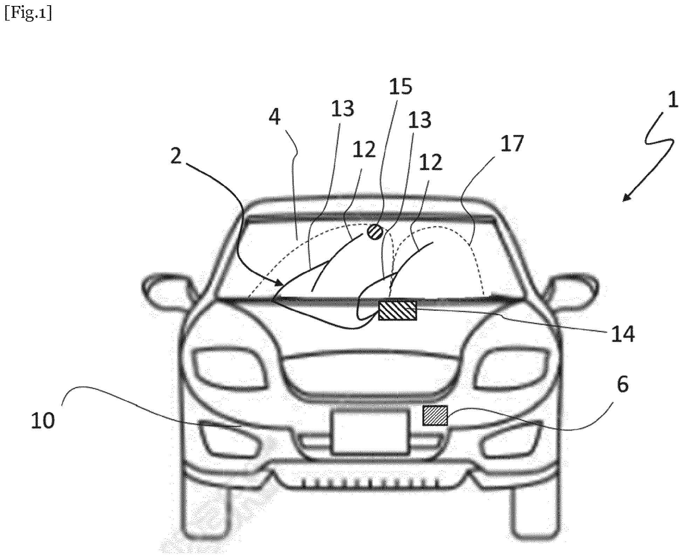

La figure 1 illustre un véhicule 1 automobile comprenant au moins un système d'essuyage 2 d'un parebrise 4 et un système de détection 6 d'un environnement extérieur du véhicule automobile 1, comprenant au moins un dispositif de détection 20 et un dispositif d'acquisition 22 d'informations en provenance du dispositif de détection 20, et pouvant notamment faire partie d'un système d'assistance à la conduite du véhicule 1. A titre d'exemple non limitatif, ce système d'assistance à la conduite du véhicule 1 peut consister en des systèmes de freinage adaptatifs, des systèmes de maintien du véhicule dans une file de circulation, des systèmes d'assistance au parking ou encore des systèmes de conduite automatisée ou semi-automatisée.

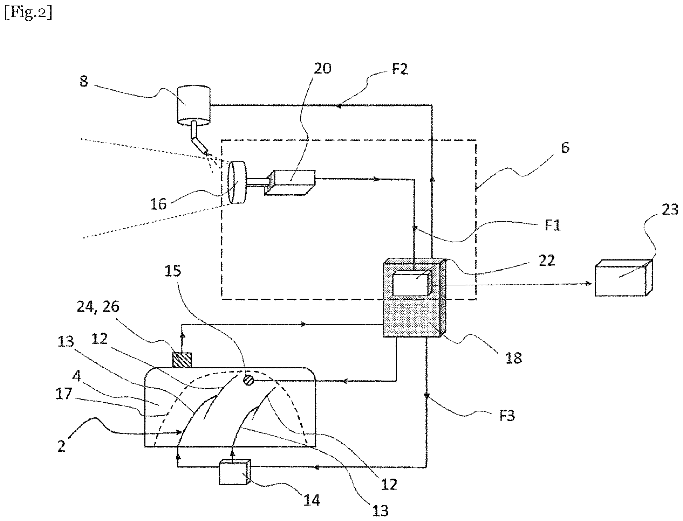

Selon un exemple de réalisation, le système de détection 6 est équipé d'un dispositif de nettoyage 8, visible à la figure 2, qui permet de conserver le système de détection 6 propre, pour que les données acquises puis exploitées soient fiables.

Dans l'exemple illustré de la figure 1, le système de détection 6 est disposé dans une calandre 10 du véhicule 1 automobile, mais on comprendra de ce qui va suivre qu'un tel système de détection 6 pourra être mis en oeuvre également ou alternativement à l'arrière ou latéralement par rapport au véhicule 1 automobile, ou encore dans un rétroviseur de ce véhicule.

Le système d'essuyage 2 du parebrise 4 comprend au moins un balai d'essuyage 12, un bras 13 porteur du balai d'essuyage et au moins un moteur 14 apte à entraîner en mouvement le balai d'essuyage 12 sur le parebrise 4. Dans l'exemple illustré le système d'essuyage 2 comprend deux balais d'essuyage 12 ménagés sur deux bras 13, l'ensemble étant entraîné en mouvement par le moteur 14. Un tel mouvement des balais d'essuyage 12 sur la surface du parebrise 4 permet de débarrasser ce dernier des projections de pluie ou de tout autre perturbateur visuel. De manière plus précise le système d'essuyage 2 permet d'essuyer une surface de balayage 17 du parebrise 4 correspondant à la surface du parebrise 4 qui est balayée par les balais d'essuyage 12. On permet ainsi à un conducteur du véhicule 1 automobile d'avoir une vision nette de la route. Également, dans une variante où le véhicule 1 automobile intègre au moins un capteur d'acquisition de données 15, positionné derrière le parebrise 4 et dans la surface de balayage 17 balayée par le système d'essuyage 2, on permet audit capteur d'acquisition de données 15 de relever des données fiables, sans interférences visuelles.

Selon l'invention et afin de fiabiliser la captation de données par le système de détection 6, le dispositif de nettoyage 8, visible à la figure 2, est ménagé de telle sorte qu'il assure le nettoyage d'une surface vitrée 16 du système de détection 6.

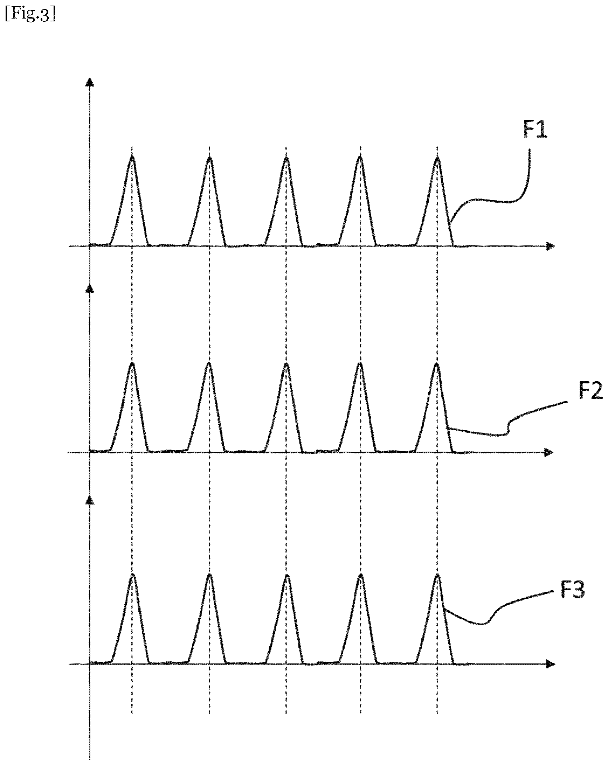

Le dispositif de nettoyage 8, le système de détection 6 et plus particulièrement le procédé de nettoyage du système de détection 6 vont maintenant être décrits plus en détails en rapport avec la figure 2 et la figure 3.

La figure 2 est une représentation schématique des liens de communication et de contrôle entre le système de détection 6, le dispositif de nettoyage 8, le système d'essuyage 2 ainsi qu'une unité de contrôle 18.

Le système de détection 6 comprend au moins le dispositif d'acquisition 22 de l'information en provenance du dispositif de détection 20 et la surface vitrée 16.

Le dispositif d'acquisition 22 a pour fonction d'acquérir l'information captée par le dispositif de détection 20 et de la traiter afin de fournir par exemple une information à un dispositif annexe 23 du véhicule automobile. Selon un exemple non limitatif, le dispositif d'acquisition 22 peut traiter l'information de telle sorte qu'il délivre une évaluation d'une distance du véhicule automobile par rapport à un obstacle extérieur audit véhicule automobile. Cette évaluation de la distance peut par la suite être utilisée par le dispositif annexe 23 afin de délivrer une information au conducteur dans le cadre d'une assistance au parking ou encore être utilisé par le véhicule automobile dans le cadre des systèmes de freinage adaptatifs.

La surface vitrée 16 est disposée en regard du dispositif de détection 20, afin que celui-ci puisse capter les informations de l'environnement extérieur du véhicule automobile. La surface vitrée 16 est alors une surface transparente ou translucide de manière à laisser passer les rayons émis et reçus par le dispositif de détection 20. La surface vitrée 16 peut être par exemple du verre ou du plexiglas. Par ailleurs, la surface vitrée 16 peut avantageusement être hydrophobe, soit par traitement direct dans la matière, soit par recouvrement d'un revêtement hydrophobe.

La surface vitrée 16 peut être partie intégrante du dispositif de détection 20 ou un élément rapporté sur ce dernier. D'une manière avantageuse, si la surface vitrée 16 ne fait pas partie intégrante du dispositif de détection 20, la surface vitrée 16 est configurée pour que ses dimensions soient identiques ou sensiblement identiques aux dimensions du dispositif de détection 20, par exemple aux dimensions de la surface de la zone d'émission et/ou de réception du dispositif de détection 20.

La surface vitrée 16 du système de détection 6 est telle qu'elle est tournée vers l'extérieur du véhicule 1 automobile, est donc exposée aux projections d'eau ou de tout autre polluant environnemental. Un liquide peut ainsi être présent sur la surface vitrée 16 et ce liquide peut correspondre à des gouttes de pluie en cas d'intempéries. La quantité de gouttes de pluie peut ainsi être variable, selon la météo, et elle est répartie de manière aléatoire sur la surface vitrée 16. Le dispositif de nettoyage 8 a alors pour fonction d'évacuer ces gouttes hors de la surface vitrée 16 afin de ne pas gêner l'acquisition de données en provenance du dispositif de détection 20 à travers la surface vitrée 16, par le dispositif d'acquisition 22.

Selon l'invention, le dispositif de nettoyage 8 est un dispositif de nettoyage 8 à air pulsé. De manière plus précise, le dispositif de nettoyage 8 est apte à générer un flux d'air en direction de la surface vitrée 16 du dispositif de détection 20 suivant une pression et un débit d'air adéquats et suffisants pour évacuer les gouttes d'eau en dehors de ladite surface vitrée 16. Il convient de considérer que le flux d'air pulsé n'est pas limité à l'évacuation de gouttes d'eau et peut également être utilisé dans le cas d'autres projections, tel que de la poussière.

Le parebrise 4 du véhicule 1 automobile, visible à la figure 2, comprend le système d'essuyage 8 et un capteur météorologique 24. Le capteur météorologique 24 a pour fonction la détection d'un événement météorologique dans l'environnement extérieur du véhicule 1 automobile. Le capteur météorologique 24 peut alors être par exemple un capteur de pluie 26 apte à détecter des gouttes de pluie qui arrivent en contact avec le parebrise 4. On comprend alors que le capteur de pluie 26 est disposé sur le véhicule 1 automobile de telle sorte qu'il soit apte à capter le phénomène météorologique.

Le capteur de pluie 26 peut ainsi être disposé au niveau du parebrise 4 du véhicule 1 automobile tel que cela est visible à la figure 2, mais il peut également être intégré au système de détection 6, selon un exemple non représenté.

Le capteur météorologique 24 peut également être configuré pour collecter au moins une information sur l'événement météorologique, comme par exemple une intensité dudit événement météorologique. En l'espèce, le capteur de pluie 26 est apte à collecter des informations sur le phénomène de pluie au moyen de sa surface de contact qui permet d'estimer une intensité de la pluie. Il convient de considérer que le capteur de pluie 26 est apte à collecter tout type d'informations corrélées à l'événement météorologique, mais que seul l'utilisation de l'intensité sera exposée ici.

A la suite de la détection de l'événement météorologique par le capteur météorologique 24, celui-ci transmet au moins une information afférente audit événement météorologique à l'unité de contrôle 18, et notamment l'intensité de cet événement météorologique.

L'unité de contrôle 18 a pour fonction de contrôler le système d'essuyage 2 et le système de détection 6, et a également pour fonction de mettre en oeuvre le procédé de nettoyage. De manière plus précise, l'unité de contrôle 18 communique d'une part avec le moteur 14 du système d'essuyage 2, d'autre part avec le dispositif d'acquisition 22 du système de détection 6, avec le dispositif de nettoyage 8 de la surface vitrée 16 du dispositif de détection 20, et enfin de manière optionnelle avec le capteur d'acquisition de données 15 placé derrière la parebrise 4 et dont la surface d'observation est balayée, c'est-à-dire nettoyée, par le système d'essuyage 2 du parebrise 4 appartenant au véhicule automobile.

Le procédé de nettoyage selon l'invention débute lorsqu'un phénomène météorologique se produit dans l'environnement extérieur du véhicule automobile, ici la pluie, et que le capteur de pluie 26 détecte des gouttes de pluie qui se déposent sur le parebrise 4 du véhicule automobile. Le capteur de pluie 26 collecte alors les informations sur cet événement météorologique, et notamment son intensité, celle-ci étant représentative de la puissance de la pluie qui s'abat en dehors du véhicule automobile. On comprend que cette intensité de la pluie n'est alors pas figée et qu'elle augmente ou diminue suivant des changements météorologiques. Le capteur de pluie 26 capte alors en continue l'intensité de la pluie afin de transmettre une information révélatrice d'un état météorologique en temps réel à l'unité de contrôle 18.

L'unité de contrôle 18 traite alors la donnée d'intensité afin d'en déduire une fréquence d'action du dispositif de nettoyage 8, du système d'essuyage 2 et du dispositif d'acquisition 22 d'informations en provenance du dispositif de détection 20. De manière plus précise, l'unité de contrôle 18 impose une troisième fréquence F3 de battement des bras 13 des balais d'essuyage 12 en fonction de cette intensité de pluie captée par le capteur de pluie 26. On comprend que la troisième fréquence F3 de mouvement des bras 13 des balais d'essuyage 12 est déterminée par l'unité de contrôle 18 de telle sorte qu'elle permette à un conducteur du véhicule automobile d'obtenir une vision fiable d'une route sur laquelle il circule. Par la suite, l'unité de contrôle 18 impose au dispositif d'acquisition 22 de capter les informations en provenance du dispositif de détection 20 selon une première fréquence F1 qui est identique à la troisième fréquence F3 de battement des bras 13 des balais d'essuyage 12. Enfin, l'unité de contrôle 18 commande au dispositif de nettoyage 8 de projeter de l'air pulsé contre la surface vitrée 16 du dispositif de détection 20 suivant une deuxième fréquence F2 qui est identique à plus ou moins 10% à la première fréquence F1 de captation des informations en provenance du dispositif de détection 20 par le dispositif d'acquisition 22.

De manière optionnelle, le capteur d'acquisition de données 15 capte une donnée extérieure au véhicule automobile de manière synchronisé avec la troisième fréquence F3 de battement des bras 13 des balais d'essuyage 12. On comprend qu'une telle caractéristique permet au capteur d'acquisition de données 15 de capter une donnée fiable, cette dernière ayant été prise une fois la surface de balayage 17 balayée par les balais d'essuyage 12.

La première fréquence F1, la deuxième fréquence F2 et la troisième fréquence F3 sont représentées à la figure 3 selon trois graphes représentatifs de chacune des fréquences et sur lesquels l'abscisse correspond à un temps et l'ordonnée correspond à une action du dispositif d'acquisition ou du dispositif de nettoyage ou du système d'essuyage.

Selon une caractéristique de l'invention, la première fréquence F1 d'acquisition de données en provenance du dispositif de détection 20 par le dispositif d'acquisition 22 et la deuxième fréquence F2 de projection de l'air pulsé par le dispositif de nettoyage 8 en direction de la surface vitrée 16 du dispositif de détection 20 sont identiques.

De manière avantageuse, l'acquisition de l'information en provenance du dispositif de détection 20 par le dispositif d'acquisition 22 s'effectue en même temps que la projection d'air pulsé sur la surface vitrée 16 ou alternativement en décalé, c'est-à-dire chronologiquement juste après la projection de l'air pulsé. On tire avantage de ces caractéristiques en ce que l'acquisition d'informations par le dispositif de d'acquisition 22 est fiabilisée par l'absence de perturbations visuelles sur la surface vitrée 16 du dispositif de détection 20, dû à la projection du flux d'air pulsé sur la surface vitrée 16 par le dispositif de nettoyage 8 de manière simultanée. On tire également avantage du fait que l'invention utilise des moyens de calcul déjà développés et validés par le constructeur du véhicule automobile équipé de l'invention, ce qui évite un nouveau développement et limite les coûts associés à l'invention.

Également, et telle que cela est toujours visible sur la figure 3, la deuxième fréquence F2 évoquée ci-dessus est identique à plus ou moins 10% à la troisième fréquence F3 de mise en mouvement du système d'essuyage 2, et plus particulièrement des balais 12 d'essuie-glace entraînés en rotation par le moteur 14 dudit système d'essuyage 2.

On comprend alors qu'un tel procédé de nettoyage du système de détection tel qu'il vient d'être décrit est avantageux en ce qu'il ne nécessite pas de nouvelle unité de contrôle pour son fonctionnement ou la mise en oeuvre d'un nouveau système de calcul d'une fréquence à partir d'une intensité. Le procédé peut donc être mis en oeuvre dans un véhicule automobile comprenant déjà des moyens de calcul du fonctionnement du système d'acquisition.

L'invention atteint bien le but qu'elle s'était fixé en proposant, par des moyens simples à mettre en place, une optimisation du nettoyage de la surface vitrée d'un système de détection ainsi qu'une fiabilisation dans les informations acquises par le dispositif de détection, puis traitées par le dispositif d'acquisition.

## Revendications

1. Procédé de nettoyage d'un système de détection (6) équipant un véhicule (1), le système de détection (6) comprenant une surface vitrée (16), au moins un dispositif de détection (20) et un dispositif d'acquisition (22) d'informations en provenance du dispositif de détection (20), le véhicule (1) comprenant un dispositif de nettoyage (8) à air pulsé dirigé sur la surface vitrée (16), le dispositif d'acquisition (22) captant l'information en provenance du dispositif de détection (6) selon une première fréquence (F1) donnée et donnée, **caractérisé en ce que** le dispositif de nettoyage (8) projette l'air pulsé sur la surface vitrée (16) selon une deuxième fréquence (F2) identique à la première fréquence (F1), à plus ou moins 10%.

2. Procédé de nettoyage selon la revendication précédente, dans lequel la première fréquence (F1) et la deuxième fréquence (F2) sont identiques.

3. Procédé de nettoyage selon l'une quelconque des revendications précédentes, dans lequel l'acquisition d'informations en provenance du dispositif de détection (20) par le dispositif d'acquisition (22) s'effectue en même temps que la projection d'air pulsé sur la surface vitrée (16) par le dispositif de nettoyage (8).

4. Procédé de nettoyage selon l'une quelconque des revendications 1 ou 2, dans lequel l'acquisition d'informations en provenance du dispositif de détection (20) par le dispositif d'acquisition (22) s'effectue postérieurement à la projection d'air pulsé sur la surface vitrée (16) par le dispositif de nettoyage (8).

5. Procédé de nettoyage selon l'une quelconque des revendications précédentes, dans lequel l'acquisition d'informations en provenance du dispositif de détection (20) et la projection d'air pulsé sur la surface vitrée (16) sont dépendantes de la détection d'un événement météorologique.

6. Procédé de nettoyage selon la revendication précédente, dans lequel la détection de l'événement météorologique s'effectue par un capteur météorologique (24).

7. Procédé de nettoyage selon la revendication précédente, au cours duquel préalablement à la projection de l'air pulsé sur la surface vitrée (16) par le dispositif de nettoyage (8), le procédé comprend au moins une étape de détection de l'événement météorologique au moyen du capteur météorologique (24).

8. Procédé de nettoyage selon la revendication précédente, dans lequel les données de l'événement météorologique recueillies par le capteur météorologique (24) comprennent au moins une donnée d'intensité dudit événement météorologique qui adapte la première fréquence (F1) d'acquisition d'informations en provenance du dispositif de détection (20) et la deuxième fréquence (F2) de projection de l'air pulsé sur la surface vitrée (16) par le dispositif de nettoyage (8) à cette donnée illustrant l'intensité de l'évènement météorologique.

9. Véhicule (1) automobile équipé d'un parebrise (4) et d'un système de détection (6) de l'environnement extérieur au véhicule, le système de détection (6) comprenant une surface vitrée (16) distincte du parebrise (4), au moins un dispositif de détection (20) et un dispositif d'acquisition (22) d'informations en provenance du dispositif de détection (20), le véhicule (1) automobile comprenant un dispositif de nettoyage (8) à air pulsé dirigé sur la surface vitrée (16) du système de détection (6), le véhicule (1) automobile étant configuré pour mettre en oeuvre le procédé de nettoyage selon l'une quelconque des revendications précédentes.

10. Véhicule (1) automobile selon la revendication précédente, qui comprend un système d'essuyage (2) du parebrise (4), le système d'essuyage (2) étant opéré suivant une troisième fréquence (F3), la deuxième fréquence (F2) étant identique à plus ou moins 10% à la troisième fréquence (F3).

## Patentansprüche

1. Verfahren zum Reinigen eines Detektionssystems (6), mit dem ein Fahrzeug (1) ausgerüstet ist, wobei das Detektionssystem (6) eine Glasfläche (16), mindestens eine Detektionsvorrichtung (20) und eine Vorrichtung zur Erfassung (22) von Informationen aus der Detektionsvorrichtung (20) beinhaltet, wobei das Fahrzeug (1) eine Vorrichtung zum Reinigen (8) mit gepulster Luft, die auf die Glasfläche (16) gerichtet wird, beinhaltet, wobei die Erfassungsvorrichtung (22) die Information aus der Detektionsvorrichtung (6) gemäß einer ersten gegebenen Frequenz (F1) empfängt, **dadurch gekennzeichnet, dass** die Reinigungsvorrichtung (8) die gepulste Luft gemäß einer zweiten Frequenz (F2) auf die Glasfläche (16) lenkt, die der ersten Frequenz (F1) plus oder minus 10 % entspricht.

2. Reinigungsverfahren nach dem vorhergehenden Anspruch, wobei die erste Frequenz (F1) und die zweite Frequenz (F2) identisch sind.

3. Reinigungsverfahren nach einem beliebigen der vorhergehenden Ansprüche, wobei die Erfassung von Informationen aus der Detektionsvorrichtung (20) durch die Erfassungsvorrichtung (22) zeitgleich zu dem Lenken von gepulster Luft auf die Glasfläche (16) durch die Reinigungsvorrichtung (8) erfolgt.

4. Reinigungsverfahren nach einem beliebigen der Ansprüche 1 oder 2, wobei die Erfassung von Informationen aus der Detektionsvorrichtung (20) durch die Erfassungsvorrichtung (22) nach dem Lenken von gepulster Luft auf die Glasfläche (16) durch die Reinigungsvorrichtung (8) erfolgt.

5. Reinigungsverfahren nach einem beliebigen der vorhergehenden Ansprüche, wobei die Erfassung von Informationen aus der Detektionsvorrichtung (20) und das Lenken von gepulster Luft auf die Glasfläche (16) von der Detektion eines Wetterereignisses abhängen.

6. Reinigungsverfahren nach dem vorhergehenden Anspruch, wobei die Detektion des Wetterereignisses durch einen Wettersensor (24) erfolgt.

7. Reinigungsverfahren nach dem vorhergehenden Anspruch, während dessen das Verfahren vor dem Lenken der gepulsten Luft auf die Glasfläche (16) durch die Reinigungsvorrichtung (8) mindestens einen Schritt des Detektierens des Wetterereignisses mittels des Wettersensors (24) beinhaltet.

8. Reinigungsverfahren nach dem vorhergehenden Anspruch, wobei die durch den Wettersensor (24) gesammelten Daten des Wetterereignisses mindestens eine Intensitätsangabe zu dem Wetterereignis beinhalten, die die erste Frequenz (F1) der Erfassung von Informationen aus der Detektionsvorrichtung (20) und die zweite Frequenz (F2) des Lenkens der gepulsten Luft auf die Glasfläche (16) durch die Reinigungsvorrichtung (8) an diese Angabe, die die Intensität des Wetterereignisses verdeutlicht, anpasst.

9. Kraftfahrzeug (1), das mit einer Windschutzscheibe (4) und einem Detektionssystem (6) für die äußere Umgebung des Fahrzeugs ausgerüstet ist, wobei das Detektionssystem (6) eine Glasfläche (16), die von der Windschutzscheibe (4) verschieden ist, mindestens eine Detektionsvorrichtung (20) und eine Vorrichtung zur Erfassung (22) von Informationen aus der Detektionsvorrichtung (20) beinhaltet, wobei das Kraftfahrzeug (1) eine Vorrichtung zum Reinigen (8) mit gepulster Luft, die auf die Glasfläche (16) des Detektionssystems (6) gerichtet wird, beinhaltet, wobei das Kraftfahrzeug (1) dazu konfiguriert ist, das Reinigungsverfahren nach einem beliebigen der vorhergehenden Ansprüche umzusetzen.

10. Kraftfahrzeug (1) nach dem vorhergehenden Anspruch, das ein Wischsystem (2) für die Windschutzscheibe (4) beinhaltet, wobei das Wischsystem (2) mit einer dritten Frequenz (F3) betrieben wird, wobei die zweite Frequenz (F2) der dritten Frequenz (F3) plus oder minus 10 % entspricht.

## Claims

1. Method for cleaning a detecting system (6) with which a vehicle (1) is equipped, the detecting system (6) comprising a glazed area (16), at least one detecting device (20) and a device (22) for acquiring information from the detecting device (20), the vehicle (1) comprising a cleaning device (8) employing pulsed air directed onto the glazed area (16), the acquiring device (22) capturing information from the detecting device (6) at a given first frequency (F1), **characterized in that** the cleaning device (8) blows the pulsed air onto the glazed area (16) at a second frequency (F2) identical to the first frequency (F1), plus or minus 10%.

2. Cleaning method according to the preceding claim, wherein the first frequency (F1) and the second frequency (F2) are identical.

3. Cleaning method according to either one of the preceding claims, wherein information is acquired by the acquiring device (22) from the detecting device (20) at the same time as pulsed air is blown onto the glazed area (16) by the cleaning device (8).

4. Cleaning method according to either one of Claims 1 and 2, wherein information is acquired by the acquiring device (22) from the detecting device (20) after pulsed air has been blown onto the glazed area (16) by the cleaning device (8).

5. Cleaning method according to any one of the preceding claims, wherein information is acquired from the detecting device (20) and pulsed air is blown onto the glazed area (16) depending on detection of a meteorological event.

6. Cleaning method according to the preceding claim, wherein the meteorological event is detected by a weather sensor (24).

7. Cleaning method according to the preceding claim, in the course of which method, before pulsed air is blown onto the glazed area (16) by the cleaning device (8), the method comprises at least one step of detecting the meteorological event by means of the weather sensor (24).

8. Cleaning method according to the preceding claim, wherein meteorological-event data collected by the weather sensor (24) comprise at least one datum regarding the intensity of said meteorological event, the first frequency (F1) at which information is acquired from the detecting device (20) and the second frequency (F2) at which the pulsed air is blown onto the glazed area (16) by the cleaning device (8) being tailored to this datum regarding the intensity of said meteorological event.

9. Motor vehicle (1) equipped with a windshield (4) and a system (6) for detecting the environment outside the vehicle, the detecting system (6) comprising a glazed area (16) distinct from the windshield (4), at least one detecting device (20) and a device (22) for acquiring information from the detecting device (20), the motor vehicle (1) comprising a cleaning device (8) employing pulsed air directed onto the glazed area (16) of the detecting system (6), the motor vehicle (1) being configured to implement the cleaning method according to any one of the preceding claims.

10. Motor vehicle (1) according to the preceding claim, which comprises a system (2) for wiping the windshield (4), the wiping system (2) being operated at a third frequency (F3), the second frequency (F2) being identical plus or minus 10% to the third frequency (F3).
